# EUROPEAN PATENT SPECIFICATION

(11) **EP 2 649 856 B1**
(45) Date of publication and mention of the grant of the patent: **24.06.2015**
(21) Application number: 10809179.4
(22) Date of filing: 09.12.2010
(51) Int. Cl.: H04W 76/02

(54) **LOAD SENSITIVE DATA SESSION SCHEDULING MECHANISMS FOR WIRELESS/WIRELINE ACCESS NETWORKS**
LASTEMPFINDLICHER DATENSITZUNGSPLANUNGSMECHANISMEN FÜR DRAHTLOSE/DRAHTGEBUNDENE ZUGANGSNETZE
MÉCANISMES DE PROGRAMMATION DE SESSIONS DE DONNÉES SENSIBLES À LA CHARGE POUR DES RÉSEAUX D'ACCÈS NON FILAIRES/FILAIRES

(43) Date of publication of application: 16.10.2013
(73) Proprietor: BlackBerry Limited, Waterloo, ON N2K 0A7 (CA)
(72) Inventor: RAYAVARAPU, Venkata Ratnakar Rao, Slough Berkshire SL1 3XE (GB); STEER, David, Nepean ontario K2H 8Z8 (CA)
(74) Representative: Greenaway, Martin William
(86) International application number: PCT/IB2010/055702
(87) International publication number: WO 2012/076932

(56) References cited:
- EP-A1- 1 793 631
- WO-A1-01/47299
- WO-A1-2007/069941
- US-A1- 2004 180 677

## Description

### BACKGROUND OF THE INVENTION

### Field of the Invention

The present invention relates in general to data transmission in communications systems and more particularly card application toolkit support for Internet Protocol (IP) multimedia systems.

### Description of the Related Art

In known wireless telecommunications systems, transmission equipment in a base station or access device transmits signals throughout a geographical region known as a cell. As technology has evolved, more advanced equipment has been introduced that can provide services (including higher data rates and better managed quality of service) that were not possible previously. This advanced equipment might include, for example, an E-UTRAN (evolved universal terrestrial radio access network) node B (eNB), a base station or other systems and devices. Such advanced or next generation equipment is often referred to as long-term evolution (LTE) equipment, and a packet-based network that uses such equipment is often referred to as an evolved packet system (EPS). An access device is any component, such as a traditional base station or an LTE eNB (Evolved Node B), that can provide a user agent (UA), such as user equipment (UE) or mobile equipment (ME), with access to other components in a telecommunications system.

In mobile communication systems such as an E-UTRAN, the access device provides radio accesses to one or more UAs. The access device comprises resource scheduling functionality for allocating uplink (UL) and downlink (DL) data transmission resources among all the UAs communicating to the access device. The functions of the scheduler include, among others, dividing the available air interface capacity between the UAs, deciding the resources (e.g. sub-carrier frequencies and timing) to be used for each UA's packet data transmission, and monitoring packet allocation and system load.

An issue relating to mobile communications systems may be experienced when performing downloads (such as Internet downloads or file transfers) on a wireless and/or wired communication network. Often when performing such a downloads or file transfers, users can experience low data rates and relatively lengthy download times. Similar issues can be present with uploads. This issue can occur in spite of the use of high bandwidth technologies for access due to various reasons such as network congestion and limited network capacity. Even with technologies such as HSPA (High Speed Packet Access) or LTE (Long Term Evolution) that provide large data pipes during peak usage times, the pipe may be shared among large numbers of users which thus limits data throughput per user.

In many cases, users will typically be satisfied with their system performance if their download is completed by a certain time irrespective of when and how the download happens. For example, a user may wish to download music albums or movies online (either via a wired or wireless network). When the user initiates these downloads on the move or in the office they may not be interested in immediately listening/watching the media. This user would likely not mind if the download is complete by the time they arrive home or before the weekend. Even leisure users, in some cases, may not mind waiting for a day or two for a download to complete (as, for example, they can always watch/listen to the download they have initiated a day before). The same issue can also apply equally for data uploads. From the network's perspective when more and more users start accessing the network during peak-hours, the network load and congestion will increase. Delay insensitive data sessions can often choke the network pipe, thus affecting other users who may desire faster response times. To address this issue, users might be billed at a premium for the network usage during peak-hours or be penalized in other ways due to lengthier download times. At other times however, network capacity may be under-utilized during off-peak hours resulting in lost revenue and reduced average network efficiency for operators.

In certain known applications a user (or user client) can connect to the network at scheduled time and date to schedule a data transfer. However these applications do not consider whether the network conditions are optimal to access the service at that instant. Thus, additional session requests when received at an inappropriate time can actually increase the load on the network without any net improvement in the service. Likewise network scheduling strategies may be defined which try to optimize the wireless utilization based on various criteria. However these scheduling strategies help the users with their throughputs only if users make a data session request when the conditions are favorable.

US 2004/180677 relates to providing deferable data services in the cellular communication system including determining that an air interface is congested.

Thus, it would be desirable to provide a solution that links user requirements of data sessions to the network conditions and achieves mutually beneficial results for the user and for the network

### BRIEF DESCRIPTION OF THE DRAWINGS

The present invention may be better understood, and its numerous objects, features and advantages made apparent to those skilled in the art by referencing the accompanying drawings. The use of the same reference number throughout the several figures designates a like or similar element.
Figure 1 shows a timing diagram of communication between an application manager, a communication device and a communication network.
Figure 2 shows another timing diagram of communication between an application manager, a communication device and a communication network.
Figure 3 depicts an exemplary system in which the present invention may be implemented;
Figure 4 shows a wireless communications system including an embodiment of a user equipment (UE);
Figure 5 is a simplified block diagram of an exemplary UE comprising a digital signal processor (DSP); and
Figure 6 is a simplified block diagram of a software environment that may be implemented by the DSP.

### DETAILED DESCRIPTION

In accordance with the present invention, a method and apparatus for linking user requirements of data sessions to the network conditions is set forth. Such a method and apparatus achieves mutually beneficial results for the user and for the network by providing an application making an advance request for a data session which communication device will immediately acknowledge but will attend to the request at its convenience. The delayed data session setup is based on the actual network conditions which are either sensed by the device or provided by an agent in the network. The method can be overlaid on top of existing wireless handsets using current and future technologies. Hence all the flexibility and configurability associated with data sessions offered by the existing solutions can remain intact with added advantages for the customer and the operator. In various embodiments, the method makes use of a network load measurement capability in the device and/or a network agent.

For each data session request, an entity managing user applications (based on user input or preset settings) can indicate to a communication device if the data session is required for immediate use or of if it is an advance request for a data session that may be delayed if needed to suit network conditions. In certain embodiments, along with this request, a set of optional information elements can be included. For example, these elements can include an identifier of the application session that wishes to use the data pipe, details of the requested data session such as an amount of data to be downloaded, the latest time by when the download should have been completed, and information regarding billing periods and preferences. For immediate data session requests, the communication device initiates a data session setup immediately as it normally would. For advance requests, the communication device stores the request and provides an acknowledgement to the application manager with a token corresponding to the request. The communication device serves these advance requests by means of a number of delayed data sessions each of them being setup or torn down at suitable times in a load sensitive way based on knowledge of network conditions and the user's expectation for the data/information availability.

The delayed scheduling of data sessions in a load-sensitive way is achieved by the communication device using one or a combination of a plurality of methods. For example, in one method, for each delayed data session scheduled, the communication device notifies the application manager with a token corresponding to a previous request and an indication of the available data pipe. The application manager then uses the available data pipe for a specific application or a combination of applications until the data session is completed or the communication device closes the pipe. The communication device also uses the other preferences information provided in the session request for determining when to setup or release a data session. The application manager and the communication device regularly exchange handshaking signals to share the status of various data sessions, available data, pipes and/or bandwidth. Based on this handshaking, the available data pipe can be flexibly managed and if desired, the application manager can reconfigure certain application sessions for immediate access.

Various illustrative embodiments of the present invention will now be described in detail with reference to the accompanying figures. While various details are set forth in the following description, it will be appreciated that the present invention may be practiced without these specific details, and that numerous implementation-specific decisions may be made to the invention described herein to achieve the inventor's specific goals, such as compliance with process technology or design-related constraints, which will vary from one implementation to another. While such a development effort might be complex and time-consuming, it would nevertheless be a routine undertaking for those of skill in the art having the benefit of this disclosure. For example, selected aspects are shown in block diagram and flow chart form, rather than in detail, in order to avoid limiting or obscuring the present invention. In addition, some portions of the detailed descriptions provided herein are presented in terms of algorithms or operations on data within a computer memory. Such descriptions and representations are used by those skilled in the art to describe and convey the substance of their work to others skilled in the art.

As used herein, the terms "component," "system" and the like are intended to refer to a computer-related entity, either hardware, a combination of hardware and software, software, or software in execution. For example, a component may be, but is not limited to being, a process running on a processor, a processor, an object, an executable, a thread of execution, a program, or a computer. By way of illustration, both an application running on a computer and the computer itself can be a component. One or more components may reside within a process or thread of execution and a component may be localized on one computer or distributed between two or more computers.

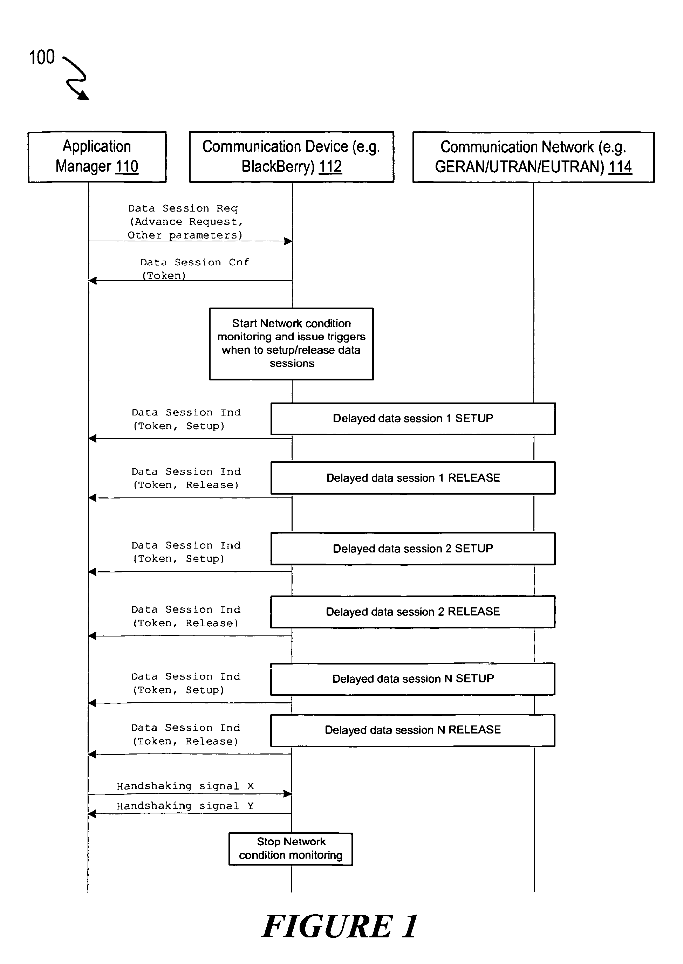

Referring to Figure 1, a timing diagram of communication between an application manager, a communication device and a communication network for delayed scheduling of data sessions is shown. The timing occurs between an application manager 110, a communication device 112 and a communication network 114. (The communication network 114 may contain a server node that is providing the data services requested by the delayed data session.)

The communication device 112 measures the network load via one or more of a plurality of methods. These methods can include observing the busyness of the paging channel (e.g., lots of pages means a busy network), observing the downlink control channel signalling (e.g. downlink traffic map in Long Term Evolution (LTE) or Worldwide Interoperability for Microwave Access (WiMAX) type network where an empty or largely unoccupied map indicates idle capacity) or measuring the delay in signaling packets sent to the network (e.g., by performing pings to the network). Specific communication devices (such as BlackBerry type communications devices) also often regularly interact with specific communication networks and relays (such as a Research In Motion network) to maintain contact between the communication device 112 and the communication network 114. Timing of signalling interactions in these specific networks can also serve as measures of the network response time and congestion. The communication device 112 can observe these measures over an interval to determine an average condition and then initiate the download over-the-air when the measured traffic level is below the average. The communications device may also interact with the server node in the network that may be servicing the delayed data session to measure the busyness of the server. This interaction may take the form, for example, of direct inquiry as to the load or indirectly, for example, from the latency in a ping message to the server. This interaction enables the delayed data session to be also scheduled to accommodate the loading of the server.

Based on the information the communication device 112 gathers by sensing the air interface or from the information available in signalling from the communication network 114, the communication device 112 can also consider using alternate networks for the download (e.g. the download may happen over a different network than the one that was active at the time of the user's request). For example a WiFi connection could be used instead of a mobile communication connection such as a Global System for Mobile Communications/ Universal Mobile Telecommunications System (GSM/UMTS). Alternately, the communication device 112 can decide to use another network that is less expensive (e.g. Carrier A instead of Carrier B), or wait until the user is back in their home network (to avoid roaming fees), or wait until an LTE channel is available (rather than just using GSM/UMTS).

More specifically, the communication for delayed scheduling of data sessions starts by the application manager 110 generating a data session request to the communication device. The data session request can include the advance data session request as well as other parameters (e.g. details of the requested data session such as an amount of data to be downloaded, the latest time by when the download should have been completed, and information regarding network subscriptions, billing periods and preferences). The communication device then returns a data session confirmation to the application manager. In certain embodiments, this confirmation may include a token. The communication device 112 is configured so that network condition monitoring is operating and to issue triggers when to setup and/or release data session based upon the network monitoring.

Based upon the network condition monitoring, a delayed data session is setup between the communication device 112 and the communication network 114. A data session identifier is provided by the communication device 112 to the application manager 110 which includes a token (i.e., an identifier of a transaction between the application manager and the communication device) as well as a setup indication. Data is then exchanged between the application manager 110 and the server providing the service in the communications network 114. At some later time, the communication device 112 determines that it is appropriate to release the delayed data session. (The release may be due to the actual completion of the data transfer or the communication network forcibly releasing the connection or the communication device voluntarily releasing the connection based on network load monitoring.) The communication device 112 and the communication network 114 perform a delayed data session release operation. In response to this release, the communication device 112 generates a data session identifier which includes a token and a release indication.

Next, at some later time based upon the network condition monitoring, a second delayed data session is setup between the communication device 112 and the communication network 114. A second data session identifier is provided by the communication device 112 to the application manager 110 which includes a token as well as a setup indication. At some later time, the communication device 112 determines that it is appropriate to release the second delayed data session. The communication device 112 and the communication network 114 perform a second delayed data session release operation. In response to this release, the communication device 112 generates a second data session identifier which includes a token and a release indication. This process is repeated up through N delayed data sessions until the communications required by the application is completed.

After a final desired delayed data session, as determined by the application manager 110, handshaking signals X and Y are generated by the application manager 110 and the communication device 112, respectively to end the series of delayed data sessions. After the hand shaking operation, the communication device stops network condition monitoring. Note that in some instances only a single delayed data session may be required to fulfill the application requirements.

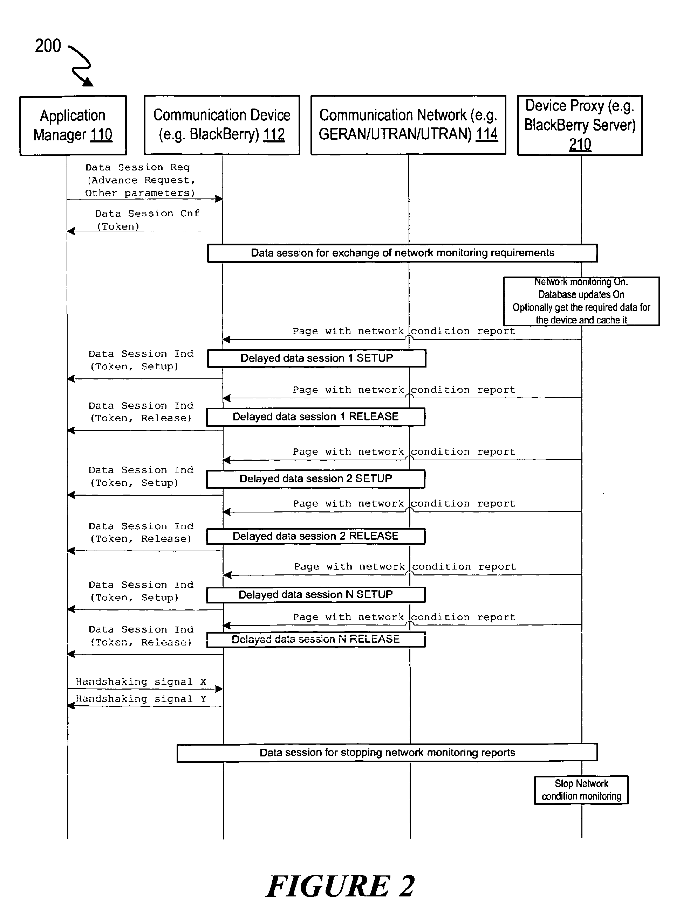

Referring to Figure 2, a timing diagram of communication 200 between an application manager 110, a communication device 112, a communication network 114 and a server 210 for delayed scheduling of data sessions is shown.

With this method for delayed scheduling of data sessions, a device server 210 (e.g., a server such as a Blackberry server) is provided (e.g., located somewhere in an Internet cloud or network 114) which is accessible to the communication device 112. The server 210 maintains a database of network traffic conditions and capacity/load patterns. The server 210 can also access real-time and non-real-time housekeeping data shared by network operators (i.e., carriers) and network partners. This data supplied by the network operators can include statistics related to channel conditions, capacity availability, and congestion and channel quality which the network operators are generating and/or using for their operations. The communication device 112 registers with this server 210 (e.g., a RIM server connected to BlackBerry access point name (APN)) for a network conditions report. In certain embodiments, multiple service providers can be operating over the same access network and the service access point of each service provider is designated with an APN. For example in the United Kingdom(UK), a Vodafone access network allows users to connect to Vodafone APN (for WAP services), Blackberry APN (for Blackberry email, messenger etc) and emergency services APN. Primarily, the APN provides an access network that throttles the data pipe, so in that sense the communication device 112 will receive one conditions report. However, in certain embodiments, it is possible that multiple network condition reports (access network + service provider network) may be generated per APN.

The communication device 112 then periodically receives a network conditions report from the server 210 which is generated based on the location and other requirements of the communication device 112 (e.g. the report will be based on the network conditions related to communications with the device and the conditions of the device's delayed session requests). Based on these reports, the communication device 112 can setup and/or release data sessions. Alternatively the server 210 can indicate a data session setup and/or release flag to the communication device 112 by comparing device requirements with actual network conditions. Using this server 210 provides an additional advantage when delaying scheduling of data sessions. More specifically, some information to be downloaded by a user may change over time and hence there is a risk when delaying scheduling of data sessions that the information the user wishes to download is not available in the same form when the information is actually downloaded. In these cases, this server 210 can be made to act as a proxy for the communication device 112. In this scenario, the communication device 112 interacts with an agent in the server 210. The agent downloads the information from the source immediately, but stores the information in a cache. The information in the cache can then be downloaded to the communication device 112 at a later time in delayed data sessions. This process ensures that the device application receives the data as it was at the time of the initial request, even if it may have changed before the delayed download to the device. In some other instances, the device application may desire to always receive the latest information in the delayed download. To enable this, the device application indicates (using a parameter passed to the communications device and the device proxy) that the delayed download should be of the latest information. In this case, the proxy server delays its interaction with the data server until the delayed download is initiated. The device application thus receives the latest information available (this could be, for example, a current transit timetable rather than one for the previous day).

More specifically, the communication for delayed scheduling of data sessions starts by the application manager 110 generating a data session request to the communication device. The data session request can include the advance data session request as well as other parameters (e.g., details of the requested data session such as an amount of data to be downloaded, revision status, the latest time by when the download should have been completed, and information regarding network subscriptions, billing periods and preferences). The communication device then returns a data session confirmation to the application manager. In certain embodiments, this confirmation may include a token. Next, a data session is established among the communication device 112, the communication network 114 and the server 210. The server is configured so that network monitoring is operating, database updates are operating and may be optionally (based on a revision status parameter) configured to obtain information for the communication device and to cache this information.

The server 210 then communicates the page with a network condition report to the communication device 112. Based upon this information, a delayed data session is setup between the communication device 112, the communication network 114 and the server 210. A data session identifier is provided by the communication device 112 to the application manager 110 which includes a token as well as a setup indication. At some later time (when network conditions are suitable for the data session), the server 210 communicates a page with a network condition report to the communication device 112 which indicates that it is time to initiate the delayed data session. The communication device 112 and the communication network 114 perform a delayed data session release operation. In response to this release, the communication device 112 generates a data session identifier which includes a token and a release indication.

Next, at some later time, the server 210 communicates a second page with a network condition report to the communication device 112. Based upon this information, a second delayed data session is setup between the communication device 112 and the communication network 114. A second data session identifier is provided by the communication device 112 to the application manager 110 which includes a token as well as a setup indication. At some later time, the server 210 communicates a page with a network condition report to the communication device 112 which indicates that it is time to initiate the second delayed data session. The communication device 112 and the communication network 114 perform a second delayed data session release operation. In response to this release, the communication device 112 generates a data session identifier which includes a token and a release indication. This process is repeated up through N delayed data sessions.

After a final desired delayed data session, as determined by the application manager 110, handshaking signals X and Y are generated by the application manager 110 and the communication device 112, respectively. After the hand shaking operation, a data session is established among the communication device 112, the communication network 114 and the server 210 for stopping generation of the network monitoring reports, after which the server 210 stops performing the network condition reporting. Note that in some instances only a single delayed data session may be required to fulfill the application requirements.

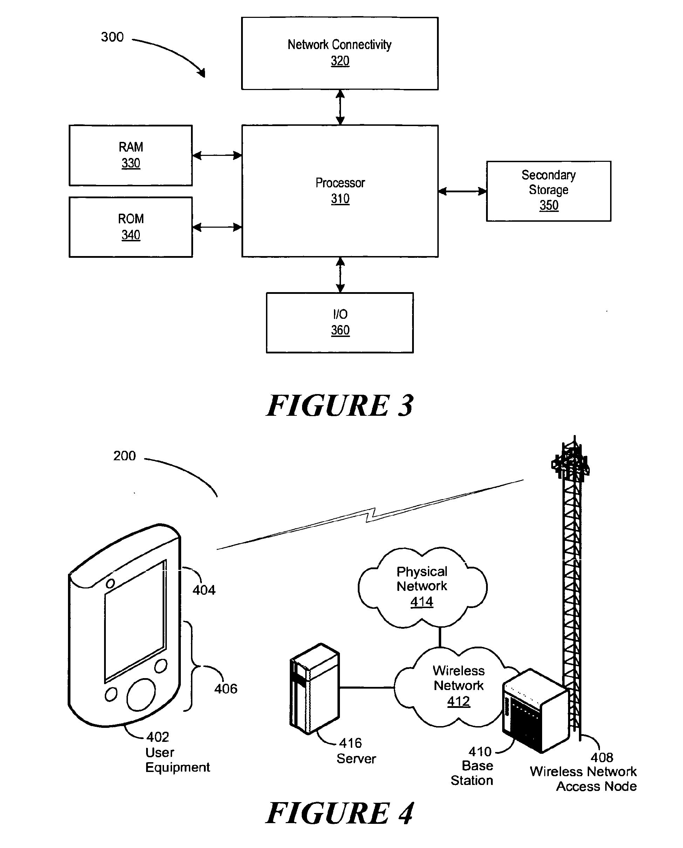

Figure 3 illustrates an example of a system 300 suitable for implementing one or more embodiments disclosed herein. In various embodiments, the system 300 comprises a processor 310, which may be referred to as a central processor unit (CPU) or digital signal processor (DSP), network connectivity devices 320, random access memory (RAM) 330, read only memory (ROM) 340, secondary storage 350, and input/output (I/O) devices 360. In some embodiments, some of these components may not be present or may be combined in various combinations with one another or with other components not shown. These components may be located in a single physical entity or in more than one physical entity. Any actions described herein as being taken by the processor 310 might be taken by the processor 310 alone or by the processor 310 in conjunction with one or more components shown or not shown in Figure 3.

The processor 310 executes instructions, codes, computer programs, or scripts that it might access from the network connectivity devices 320, RAM 330, or ROM 340. While only one processor 310 is shown, multiple processors may be present. Thus, while instructions may be discussed as being executed by a processor 310, the instructions may be executed simultaneously, serially, or otherwise by one or multiple processors 310 implemented as one or more CPU chips.

In various embodiments, the network connectivity devices 320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 320 may enable the processor 310 to communicate with the Internet or one or more telecommunications networks or other networks from which the processor 310 might receive information or to which the processor 310 might output information.

The network connectivity devices 320 may also be capable of transmitting or receiving data wirelessly in the form of electromagnetic waves, such as radio frequency signals or microwave frequency signals. Information transmitted or received by the network connectivity devices 320 may include data that has been processed by the processor 310 or instructions that are to be executed by processor 310. The data may be ordered according to different sequences as may be desirable for either processing or generating the data or transmitting or receiving the data.

In various embodiments, the RAM 330 may be used to store volatile data and instructions that are executed by the processor 310. The ROM 340 shown in Figure 3 may be used to store instructions and perhaps data that are read during execution of the instructions. Access to both RAM 330 and ROM 340 is typically faster than to secondary storage 350. The secondary storage 350 is typically comprised of one or more disk drives or tape drives and may be used for non-volatile storage of data or as an over-flow data storage device if RAM 330 is not large enough to hold all working data. Secondary storage 350 may be used to store programs that are loaded into RAM 330 when such programs are selected for execution. The I/O devices 360 may include liquid crystal displays (LCDs), touch screen displays, keyboards, keypads, switches, dials, mice, track balls, voice recognizers, card readers, paper tape readers, printers, video monitors, or other well-known input/output devices.

Figure 4 shows a wireless communications system including an embodiment of user equipment (UE) 402. Though illustrated as a mobile phone, the UE 402 may take various forms including a wireless handset, a pager, a personal digital assistant (PDA), a portable computer, a tablet computer, or a laptop computer. Many suitable devices combine some or all of these functions. In some embodiments, the UE 402 is not a general purpose computing device like a portable, laptop or tablet computer, but rather is a special-purpose communications device such as a mobile phone, a wireless handset, a pager, a PDA, or a telecommunications device installed in a vehicle. The UE 402 may likewise be a device, include a device, or be included in a device that has similar capabilities but that is not transportable, such as a desktop computer, a set-top box, or a network node. In these and other embodiments, the UE 402 may support specialized activities such as gaming, inventory control, job control, and/or task management functions, and so on.

In various embodiments, the UE 402 includes a display 404. The UE 402 likewise includes a touch-sensitive surface, a keyboard or other input keys 406 generally used for input by a user. In these and other environments, the keyboard may be a full or reduced alphanumeric keyboard such as QWERTY, Dvorak, AZERTY, and sequential keyboard types, or a traditional numeric keypad with alphabet letters associated with a telephone keypad. The input keys may likewise include a trackwheel, an exit or escape key, a trackball, and other navigational or functional keys, which may be inwardly depressed to provide further input function. The UE 402 may likewise present options for the user to select, controls for the user to actuate, and cursors or other indicators for the user to direct.

The UE 402 may further accept data entry from the user, including numbers to dial or various parameter values for configuring the operation of the UE 402. The UE 402 may further execute one or more software or firmware applications in response to user commands. These applications may configure the UE 402 to perform various customized functions in response to user interaction. Additionally, the UE 402 may be programmed or configured over-the-air (OTA), for example from a wireless base station 410, a server 416, a wireless network access node 408, or a peer UE 402.

Among the various applications executable by the UE 300 are a web browser, which enables the display 404 to display a web page. The web page may be obtained via wireless communications with a wireless network access node 408, such as a cell tower, a peer UE 402, or any other wireless communication network 412 or system. In various embodiments, the wireless network 412 is coupled to a wired network 414, such as the Internet. Via the wireless network 412 and the wired network 414, the UE 402 has access to information on various servers, such as a server 416. The server 416 may provide content that may be shown on the display 404. Alternately, the UE 402 may access the wireless network 412 through a peer UE 402 acting as an intermediary, in a relay type or hop type of connection. Skilled practitioners of the art will recognized that many such embodiments are possible and the foregoing is not intended to limit the spirit, scope, or intention of the disclosure.

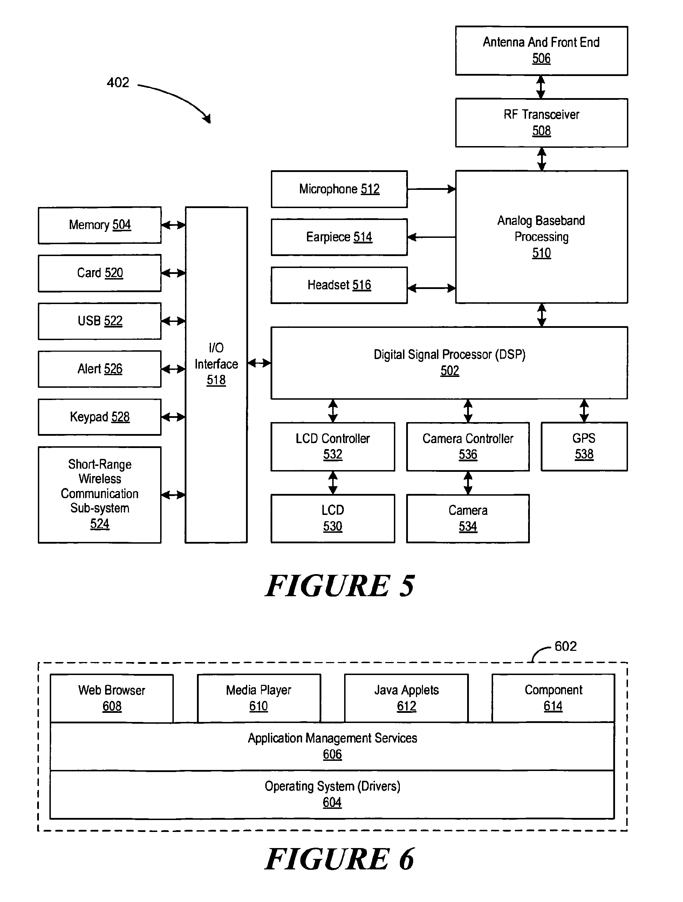

Figure 5 depicts a block diagram of an exemplary user equipment (UE) 402 in which the present invention may be implemented. While various components of a UE 402 are depicted, various embodiments of the UE 402 may include a subset of the listed components or additional components not listed. As shown in Figure 5, the UE 402 includes a digital signal processor (DSP) 502 and a memory 504. As shown, the UE 402 may further include an antenna and front end unit 506, a radio frequency (RF) transceiver 508, an analog baseband processing unit 510, a microphone 512, an earpiece speaker 514, a headset port 516, an input/output (I/O) interface 518, a removable memory card 520, a universal serial bus (USB) port 522, a short range wireless communication sub-system 524, an alert 526, a keypad 528, a liquid crystal display (LCD) 530, which may include a touch sensitive surface, an LCD controller 532, a charge-coupled device (CCD) camera 534, a camera controller 536, and a global positioning system (GPS) sensor 538. In various embodiments, the UE 402 may include another kind of display that does not provide a touch sensitive screen. In an embodiment, the DSP 502 may communicate directly with the memory 504 without passing through the input/output interface 518.

In various embodiments, the DSP 502 or some other form of controller or central processing unit (CPU) operates to control the various components of the UE 402 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the UE 402 to send and receive information from a cellular network or some other available wireless communications network or from a peer UE 402. In an embodiment, the antenna and front end unit 306 may include multiple antennas to support beam forming and/or multiple input multiple output (MIMO) operations. As is known to those skilled in the art, MIMO operations may provide spatial diversity which can be used to overcome difficult channel conditions or to increase channel throughput. Likewise, the antenna and front end unit 506 may include antenna tuning or impedance matching components, RF power amplifiers, or low noise amplifiers.

In various embodiments, the RF transceiver 508 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 510 or the DSP 502 or other central processing unit. In some embodiments, the RF Transceiver 308, portions of the Antenna and Front End 506, and the analog base band processing unit 510 may be combined in one or more processing units and/or application specific integrated circuits (ASICs).

The analog baseband processing unit 510 may provide various analog processing of inputs and outputs, for example analog processing of inputs from the microphone 512 and the headset 516 and outputs to the earpiece 514 and the headset 516. To that end, the analog baseband processing unit 510 may have ports for connecting to the built-in microphone 512 and the earpiece speaker 514 that enable the UE 402 to be used as a cell phone. The analog baseband processing unit 510 may further include a port for connecting to a headset or other hands-free microphone and speaker configuration. The analog baseband processing unit 510 may provide digital-to-analog conversion in one signal direction and analog-to-digital conversion in the opposing signal direction. In various embodiments, at least some of the functionality of the analog baseband processing unit 510 may be provided by digital processing components, for example by the DSP 502 or by other central processing units.

The DSP 502 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 502 may perform modulation, coding, interleaving, and spreading, and for a receiver function the DSP 502 may perform despreading, deinterleaving, decoding, and demodulation. In another embodiment, for example in an orthogonal frequency division multiplex access (OFDMA) technology application, for the transmitter function the DSP 502 may perform modulation, coding, interleaving, inverse fast Fourier transforming, and cyclic prefix appending, and for a receiver function the DSP 502 may perform cyclic prefix removal, fast Fourier transforming, deinterleaving, decoding, and demodulation. In other wireless technology applications, yet other signal processing functions and combinations of signal processing functions may be performed by the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the short range wireless communication sub-system 524. The USB interface 522 may be used to charge the UE 402 and may also enable the UE 402 to function as a peripheral device to exchange information with a personal computer or other computer system. The short range wireless communication sub-system 524 may include an infrared port, a Bluetooth interface, an IEEE 802.11 compliant wireless interface, or any other short range wireless communication sub-system, which may enable the UE 402 to communicate wirelessly with other nearby mobile devices and/or wireless base stations.

The input/output interface 518 may further connect the DSP 502 to the alert 526 that, when triggered, causes the UE 402 to provide a notice to the user, for example, by ringing, playing a melody, or vibrating. The alert 526 may serve as a mechanism for alerting the user to any of various events such as an incoming call, a new text message, and an appointment reminder by silently vibrating, or by playing a specific pre-assigned melody for a particular caller.

The keypad 528 couples to the DSP 502 via the I/O interface 518 to provide one mechanism for the user to make selections, enter information, and otherwise provide input to the UE 402. The keyboard 528 may be a full or reduced alphanumeric keyboard such as QWERTY, Dvorak, AZERTY and sequential types, or a traditional numeric keypad with alphabet letters associated with a telephone keypad. The input keys may likewise include a trackwheel, an exit or escape key, a trackball, and other navigational or functional keys, which may be inwardly depressed to provide further input function. Another input mechanism may be the LCD 530, which may include touch screen capability and also display text and/or graphics to the user. The LCD controller 532 couples the DSP 502 to the LCD 530.

The CCD camera 534, if equipped, enables the UE 402 to take digital pictures. The DSP 502 communicates with the CCD camera 534 via the camera controller 536. In another embodiment, a camera operating according to a technology other than Charge Coupled Device cameras may be employed. The GPS sensor 538 is coupled to the DSP 502 to decode global positioning system signals, thereby enabling the UE 402 to determine its position. Various other peripherals may also be included to provide additional functions, such as radio and television reception.

Figure 6 illustrates a software environment 602 that may be implemented by the DSP 502. The DSP 502 executes operating system drivers 604 that provide a platform from which the rest of the software operates. The operating system drivers 604 provide drivers for the UE 402 hardware with standardized interfaces that are accessible to application software. The operating system drivers 604 include application management services (AMS) 606 that transfer control between applications running on the UE 402. Also shown in Figure 6 are a web browser application 608, a media player application 610, and Java applets 612. The web browser application 608 configures the UE 402 to operate as a web browser, allowing a user to enter information into forms and select links to retrieve and view web pages. The media player application 610 configures the UE 402 to retrieve and play audio or audiovisual media. The Java applets 612 configure the UE 402 to provide games, utilities, and other functionality. A component 614 might provide functionality described herein. The UE 402, a base station 410, and other components described herein might include a processing component that is capable of executing instructions related to the actions described above.

For example, while one embodiment is described with respect to a wireless environment, it will be appreciated that load sensitive data session scheduling is equally applicable to wired environment. Thus, even though Internet back bones are very powerful (e.g., via optical fiber communications), bandwidth limitations can be present within wired access networks due to e.g., the "last mile" which often comprise copper lines or coaxial cables. So on the access networks offered by ISPs the load sensitive scheduling is beneficial.

Also for example, other methods for determining availability are also contemplated. More specifically, in one method for determining availability, a communication device which is directly making an advance request with the communication network (similar communication as described between the application manager and communication device) is paged by the communication network itself (with the help of a previously assigned token at the time of the advance request) whenever it has resources to spare. In another method, a communication network periodically broadcasts its traffic volume, resource availability, delay and congestion statistics so that a communication device can make use of the information to decide whether to access the network at that instance or not. To avoid all communication devices from overwhelming the communication network at once on seeing a traffic report, the traffic report can also indicate a 'paging group' indicating that only handsets belonging to that group can try at that instance.

As used herein, the terms "component," "system" and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a computer and the computer can be a component. One or more components may reside within a process and/or thread of execution and a component may be localized on one computer and/or distributed between two or more computers.

As used herein, the terms "user equipment" and "UE" can refer to wireless devices such as mobile telephones, personal digital assistants (PDAs), handheld or laptop computers, and similar devices or other user agents ("UAs") that have telecommunications capabilities. In some embodiments, a UE may refer to a mobile, wireless device. The term "UE" may also refer to devices that have similar capabilities but that are not generally transportable, such as desktop computers, set-top boxes, or network nodes.

Furthermore, the disclosed subject matter may be implemented as a system, method, apparatus, or article of manufacture using standard programming and/or engineering techniques to produce software, firmware, hardware, or any combination thereof to control a computer or processor based device to implement aspects detailed herein. The term "article of manufacture" (or alternatively, "computer program product") as used herein is intended to encompass a computer program accessible from any computer-readable device, carrier, or media. For example, computer readable media can include but are not limited to magnetic storage devices (e.g., hard disk, floppy disk, magnetic strips ...), optical disks (e.g., compact disk (CD), digital versatile disk (DVD) ...), smart cards, and flash memory devices (e.g., card, stick). Of course, those skilled in the art will recognize many modifications may be made to this configuration without departing from the scope or spirit of the claimed subject matter.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made without departing from the spirit and scope disclosed herein. Although the present invention has been described in detail, it should be understood that various changes, substitutions and alterations can be made hereto without departing from the scope of the invention as defined by the appended claims.

## Claims

1. A method for linking user requirements of data sessions to the network conditions comprising:
generating a delayed data session request in response to an application making a request for a data session;
substantially immediately acknowledging, via a communication device (112), receipt of the delayed data session request; and,
attending to the request for the data session at a later time based upon network (114) availability.

2. The method of claim 1 further comprising:
basing setup of the data session upon actual network conditions.

3. The method of claim 2 wherein:
the actual network conditions are determined by at least one of sensing by the communication device (112) and providing information regarding the actual network conditions via an agent in the communication network (114).

4. The method of claim 2 wherein:
the actual network conditions are determined via a network load measurement operation.

5. The method of claim 1 wherein:
for each data session request, an entity managing user applications (110) indicates to the communication device (112) whether the data session is required for immediate use or is an advance request for a future data session.

6. The method of claim 1 wherein:
at least one of a plurality of information elements is included with the data session request, the at least one of the plurality of information elements comprising at least one of an identifier of the application session that wishes to use the communication network (114) and details of the requested data session.

7. The method of claim 6 wherein:
the details of the requested data session comprise at least one of an amount of data to be downloaded, a latest time by when the download should be completed, indication if the current or latest information is to be communicated and information regarding billing periods and preferences.

8. The method of claim 1 wherein:
the communication device (112) can select a particular access point name (APN) to use if a service for attending to the request for the data session at a later time based upon network availability is available from a plurality of APNs, the communication device selecting the particular APN based upon of network conditions of the plurality of APNs.

9. An apparatus for linking user requirements of data sessions to the network conditions comprising:
means for generating a delayed data session request in response to an application making a request for a data session;
means for substantially immediately acknowledging, via a communication device (112), receipt of the delayed data session request; and,
means for attending to the request for the data session at a later time based upon network availability.

10. The apparatus of claim 9 further comprising:
means for basing setup of the data session upon actual network conditions.

11. The apparatus of claim 10 wherein:
the actual network conditions are determined by at least one of sensing by the communication device (112) and providing information regarding the actual network conditions via an agent in the communication network (114).

12. The apparatus of claim 10 wherein:
the actual network conditions are determined via a network load measurement operation.

13. The apparatus of claim 9 wherein:
for each data session request, an entity managing user applications (110) is arranged to indicate to the communication device (112) whether the data session is required for immediate use or is an advance request for a future data session.

14. The apparatus of claim 9 wherein:
at least one of a plurality of information elements is included with the data session request, the at least one of the plurality of information elements comprising at least one of an identifier of the application session that wishes to use the communication network (114) and details of the requested data session.

15. The apparatus of claim 14 wherein:
the details of the requested data session comprise at least one of an amount of data to be downloaded, a latest time by when the download should be completed, indication if the current or latest information is to be communicated and information regarding billing periods and preferences.

## Patentansprüche

1. Verfahren zum Koppeln von Benutzeranforderungen für Datensitzungen an die Netzgegebenheiten, mit:
Erzeugen einer Anfrage für eine verzögerte Datensitzung als Reaktion darauf, dass eine Anwendung eine Anfrage für eine Datensitzung stellt,
im Wesentlichen unmittelbarem Bestätigen eines Empfangs der Anfrage für eine verzögerte Datensitzung über eine Kommunikationsvorrichtung (112) und
Sich-Widmen der Anfrage für die Datensitzung zu einem späteren Zeitpunkt auf Grundlage einer Netz-(114)-Verfügbarkeit.

2. Verfahren nach Anspruch 1, ferner mit:
Basieren eines Einstellens der Datensitzung auf tatsächliche Netzgegebenheiten.

3. Verfahren nach Anspruch 2, wobei:
die tatsächlichen Netzgegebenheiten durch mindestens eines aus einem Wahrnehmen durch die Kommunikationsvorrichtung (112) und einem Bereitstellen von Information bezüglich der tatsächlichen Netzgegebenheiten über einen Agenten in dem Kommunikationsnetz (114) bestimmt werden.

4. Verfahren nach Anspruch 2, wobei:
die tatsächlichen Netzgegebenheiten über einen Netzlastmessvorgang bestimmt werden.

5. Verfahren nach Anspruch 1, wobei:
für jede Datensitzungsanfrage eine
Entitätenverwaltungsbenutzeranwendung (110) der Kommunikationsvorrichtung (112) angibt, ob die Datensitzung für unmittelbaren Gebrauch benötigt wird oder eine Vorabanfrage für eine zukünftige Datensitzung ist.

6. Verfahren nach Anspruch 1, wobei:
mindestens eines aus einer Vielzahl von Informationselementen in der Datensitzungsanfrage eingeschlossen sind, wobei das mindestens eine aus der Vielzahl von Informationselementen mindestens eines aus einer Kennung einer Anwendungssitzung, die wünscht, das Kommunikationsnetz (114) zu verwenden, und Details der angefragten Datensitzung aufweist.

7. Verfahren nach Anspruch 6, wobei:
die Details der angefragten Datensitzung mindestens eines aus einer Menge von Daten, die heruntergeladen werden sollen, und einem spätesten Zeitpunkt, bis wann das Herunterladen abgeschlossen sein sollte, einer Angabe, ob die aktuelle oder neueste Information kommuniziert werden soll, und Information bezüglich Abrechnungszeitabschnitten und Vorlieben bzw. Einstellungen aufweisen.

8. Verfahren nach Anspruch 1, wobei:
die Kommunikationsvorrichtung (112) einen bestimmten Zugangspunkt bzw. Access Point Name (APN) auswählen kann, der zu verwenden ist, wenn ein Dienst zum Sich-Widmen der Anfrage für die Datensitzung zu einem späteren Zeitpunkt auf Grundlage der Netzverfügbarkeit von einer Vielzahl von APNs verfügbar ist, wobei die Kommunikationsvorrichtung den bestimmten APN auf Grundlage von Netzgegebenheiten der Vielzahl von APNs auswählt.

9. Gerät zum Koppeln von Benutzeranforderungen für Datensitzungen an die Netzgegebenheiten, mit:
Mitteln zum Erzeugen einer Anfrage für eine verzögerte Datensitzung als Reaktion darauf, dass eine Anwendung eine Anfrage für eine Datensitzung stellt,
Mitteln zum im Wesentlichen unmittelbaren Bestätigen eines Empfangs der Anfrage für eine verzögerte Datensitzung über eine Kommunikationsvorrichtung (112) und
Mitteln zum Sich-Widmen der Anfrage für die Datensitzung zu einem späteren Zeitpunkt auf Grundlage einer Netzverfügbarkeit.

10. Gerät nach Anspruch 9, ferner mit:
Mitteln zum Basieren eines Einstellens der Datensitzung auf tatsächliche Netzgegebenheiten.

11. Gerät nach Anspruch 10, wobei:
die tatsächlichen Netzgegebenheiten durch mindestens eines aus einem Wahrnehmen durch die Kommunikationsvorrichtung (112) und einem Bereitstellen von Information bezüglich der tatsächlichen Netzgegebenheiten über einen Agenten in dem Kommunikationsnetz (114) bestimmt werden.

12. Gerät nach Anspruch 10, wobei:
die tatsächlichen Netzgegebenheiten über einen Netzlastmessvorgang bestimmt werden.

13. Gerät nach Anspruch 9, wobei:
für jede Datensitzungsanfrage eine
Entitätenverwaltungsbenutzeranwendung (110) dazu ausgelegt ist, der Kommunikationsvorrichtung (112) anzugeben, ob die Datensitzung für unmittelbaren Gebrauch benötigt wird oder eine Vorabanfrage für eine zukünftige Datensitzung ist.

14. Gerät nach Anspruch 9, wobei:
mindestens eines aus einer Vielzahl von Informationselementen in der Datensitzungsanfrage eingeschlossen sind, wobei das mindestens eine aus der Vielzahl von Informationselementen mindestens eines aus einer Kennung einer Anwendungssitzung, die wünscht, das Kommunikationsnetz (114) zu verwenden, und Details der angefragten Datensitzung aufweist.

15. Gerät nach Anspruch 14, wobei:
die Details der angefragten Datensitzung mindestens eines aus einer Menge von Daten, die heruntergeladen werden sollen, und einem spätesten Zeitpunkt, bis wann das Herunterladen abgeschlossen sein sollte, einer Angabe, ob die aktuelle oder neueste Information kommuniziert werden soll, und Information bezüglich Abrechnungszeitabschnitten und Vorlieben bzw. Einstellungen aufweisen.

## Revendications

1. Procédé pour relier des besoins d'utilisateur de sessions de données aux conditions de réseau, comprenant le fait :
de générer une demande de session de données retardée en réponse à une application faisant une demande pour une session de données ;
de reconnaître sensiblement immédiatement, par l'intermédiaire d'un dispositif de communication (112), une réception de la demande de session de données retardée ; et,
de répondre ultérieurement à la demande pour la session de données sur la base d'une disponibilité de réseau (114).

2. Procédé de la revendication 1 comprenant en outre le fiait :
de baser une configuration de la session de données sur des conditions de réseau effectives.

3. Procédé de la revendication 2 dans lequel :
les conditions de réseau effectives sont déterminées par au moins l'une d'une détection par le dispositif de communication (112) et d'une fourniture d'informations concernant les conditions de réseau effectives par l'intermédiaire d'un agent dans le réseau de communication (114).

4. Procédé de la revendication 2 dans lequel :
les conditions de réseau effectives sont déterminées par l'intermédiaire d'une opération de mesure de charge de réseau.

5. Procédé de la revendication 1 dans lequel :
pour chaque demande de session de données, une entité gérant des applications d'utilisateur (110) indique au dispositif de communication (112) si la session de données est nécessaire pour une utilisation immédiate ou si elle est une demande anticipée pour une future session de données.

6. Procédé de la revendication 1 dans lequel :
au moins l'un d'une pluralité d'éléments d'informations est inclus avec la demande de session de données, l'au moins un de la pluralité d'éléments d'informations comprenant au moins l'un d'un identifiant de la session d'application qui souhaite utiliser le réseau de communication (114) et des détails de la session de données demandée.

7. Procédé de la revendication 6 dans lequel :
les détails de la session de données demandée comprennent au moins l'une d'une quantité de données à télécharger, d'un dernier délai auquel le téléchargement devrait être achevé, d'une indication si les dernières informations ou les informations actuelles doivent être communiquées et des informations concernant des périodes et des préférences de facturation.

8. Procédé de la revendication 1 dans lequel :
le dispositif de communication (112) peut choisir un nom de point d'accès particulier (APN) à utiliser si un service permettant de répondre ultérieurement à la demande pour la session de données sur la base d'une disponibilité de réseau est disponible à partir d'une pluralité d'APNs, le dispositif de communication choisissant l'APN particulier sur la base de conditions de réseau de la pluralité d'APNs.

9. Appareil pour relier des besoins d'utilisateur de sessions de données aux conditions de réseau, comprenant :
un moyen pour générer une demande de session de données retardée en réponse à une application faisant une demande pour une session de données ;
un moyen pour reconnaître sensiblement immédiatement, par l'intermédiaire d'un dispositif de communication (112), une réception de la demande de session de données retardée ; et,
un moyen pour répondre ultérieurement à la demande pour la session de données sur la base d'une disponibilité de réseau.

10. Appareil de la revendication 9 comprenant en outre :
un moyen pour baser une configuration de la session de données sur des conditions de réseau effectives.

11. Appareil de la revendication 10 dans lequel :
les conditions de réseau effectives sont déterminées par au moins l'une d'une détection par le dispositif de communication (112) et d'une fourniture d'informations concernant les conditions de réseau effectives par l'intermédiaire d'un agent dans le réseau de communication (114).

12. Appareil de la revendication 10 dans lequel :
les conditions de réseau effectives sont déterminées par l'intermédiaire d'une opération de mesure de charge de réseau.

13. Appareil de la revendication 9 dans lequel :
pour chaque demande de session de données, une entité gérant des applications d'utilisateur (110) est agencée pour indiquer au dispositif de communication (112) si la session de données est nécessaire pour une utilisation immédiate ou si elle est une demande anticipée pour une future session de données.

14. Appareil de la revendication 9 dans lequel :
au moins l'un d'une pluralité d'éléments d'informations est inclus avec la demande de session de données, l'au moins un de la pluralité d'éléments d'informations comprenant au moins l'un d'un identifiant de la session d'application qui souhaite utiliser le réseau de communication (114) et des détails de la session de données demandée.

15. Appareil de la revendication 14 dans lequel :
les détails de la session de données demandée comprennent au moins l'une d'une quantité de données à télécharger, d'un dernier délai auquel le téléchargement devrait être achevé, d'une indication si les dernières informations ou les informations actuelles doivent être communiquées et des informations concernant des périodes et des préférences de facturation.
